# EUROPEAN PATENT SPECIFICATION

(11) **EP 0 861 534 B1**
(45) Date of publication and mention of the grant of the patent: **20.06.2007**
(21) Application number: 96943490.1
(22) Date of filing: 15.11.1996
(51) Int. Cl.: H04J 3/14, H04J 3/24, H04L 12/56, H04Q 11/04

(54) **INSTRUMENT FOR TEST AND MEASUREMENT OF ATM NETWORK VIRTUAL CONNECTIONS**
INSTRUMENT ZUM TESTEN UND MESSEN VON VIRTUELLEN VERBINDUNGEN IN EINEM ATM NETZWERK
INSTRUMENT DE CONTROLE ET DE MESURE DE CONNEXIONS VIRTUELLES DE RESEAU ATM

(30) Priority: 17.11.1995 US 560117; 17.11.1995 US 560285; 17.11.1995 US 560286; 28.11.1995 US 563522
(43) Date of publication of application: 02.09.1998
(73) Proprietor: Telecommunications Techniques Corporation, Germantown, MD 20876-4023 (US)
(72) Inventor: VANDERVORT, Cole, S., Frederick, MD 21702 (US); FAHEL, Elias, E., Germantown, MD 20874 (US)
(74) Representative: Carpmaels & Ransford
(86) International application number: PCT/US1996/018181
(87) International publication number: WO 1997/019535

(56) References cited:
- US-A- 5 140 588
- US-A- 5 179 557
- US-A- 5 257 311
- US-A- 5 278 830
- US-A- 5 280 469
- US-A- 5 313 453
- US-A- 5 357 510
- US-A- 5 402 426
- US-A- 5 422 838

## Description

### Field of the Invention

This invention relates to a test instrument and methods of use for testing the operation of asynchronous transfer mode (ATM) telecommunication networks. More particularly, the invention relates to test instruments for testing transmission of cells belonging to individual virtual connections through the network.

### Background of the Invention

With the increase in use of computing facilities throughout modern society, and in particular with increased communication over optical fiber-linked networks having far higher transmission speeds than previous conductive wire connections, there is substantial interest in new methods of communication. More particularly, previous communication tended to be segregated between voice and data communication, with different networks being provided for each. Typically voice communication took place over the telephone system, while high speed data communication took place over dedicated lines; data communication is also possible in the telephone system, but only at substantially slower rates than provided by dedicated lines. More recently, digital video and image communications have become of increased interest, particularly for so-called multimedia applications.

The result is that substantial improvements in flexibility of communication techniques are needed, in particular, to permit convenient future upgrading of communication facilities over time as additional data sources become available. Still more specifically, it is imperative that standards be developed and implemented allowing voice, video, images, and data to be transmitted more or less interchangeably over varying transmission media, such that equipment installed at a particular time will not soon be obsolete, but can continue to be used for communication as overall communication speeds are increased in the future.

These needs are largely expected to be met through broad implementation of so-called asynchronous transfer mode (ATM) communication networks. As distinguished from synchronous transfer mode (STM) communications, ATM allows the traffic rate from a particular source to be increased or decreased upon demand when communication is desirable. By comparison, in STM, a particular user is assigned particular synchronous time slots on a particular communications medium, limiting the flexibility of the system. The significance of this distinction between asynchronous and synchronous transmission to the invention is discussed further below.

ATM networks are in the process of being installed in conformity with internationally-agreed upon standards for transmission of "cells" of data, including in "data" as used herein digitized voice communication, digitized images, and digitized video, as well as data per se. In ATM, all types of messages to be transmitted are divided into fixed length "cells", each cell including a header including cell payload type and routing information, and a fixed length "payload". The payload of each cell typically contains a relatively small portion of an overall message to be transmitted from a source to a destination. The ATM cells are transmitted by way of a source node into a network comprising a large number of switching nodes connected by communication links. Accordingly, an overall message to be transmitted from an originating source to an ultimate destination is divided into a number of cells, transmitted in sequence over a "virtual connection" established when the communication is established. Each cell transmitted as part of an ATM message transits the same virtual connection, that is, is routed through the same sequence of switching nodes and connecting links.

It is important in effective implementation of ATM networks that the specific type of communication links included in each virtual connection not be a constraint on the format of the ATM cell. That is, the cells of a particular ATM message may be transmitted by wire, by fiber optic cable, by satellite, or by combinations of these. The cell format itself remains unchanged. In this way, flexibility of the network configuration and implementation of future faster communications media can be provided without, for example, rendering obsolete the equipment used to generate cells from messages to be transmitted.

By comparison, according to another modern day communication technology, data is commonly transmitted in the so-called "frame relay" mode, wherein each "packet" transmitted includes the entire message. Hence each packet is of different length. In frame relay transmissions, the packet of data corresponding to the message is preceded by a single header, such that the entire message is transmitted in one long burst over a predetermined route through a series of nodes from a source node to a destination node. This system remains workable, but is relatively inflexible as traffic needs change from time to time. Further, frame relay transmission is best suited for communication of data per se, which tends to be "bursty". Voice and video communication have different intrinsic requirements.

More specifically, communication of data per se is typically time-insensitive, in that some time delay, and considerable variation in the time delay experienced by successive messages or segments of messages, between the time of transmission and the time of reception does not interfere with utility of communication. Voice and video transmissions are by comparison very sensitive to transmission time, in that all portions of the message must be received at a rate closely proportional to the rate at which they are transmitted, if important information is not to be lost. Variation in the delay between segments of a voice or video transmission is particularly disturbing to the receiving party.

In ATM, as noted, messages are divided into relatively small cells which are individually transmitted. For example, a voice communication may be transmitted in cells each effectively encoding single words, or even single syllables. The ATM format allows the individual cells of the message to be transmitted relatively instantaneously, such that they can be reassembled and delivered to a listener or viewer at the destination without perceptible delay. More specifically, because each message is transmitted over its own virtual connection, set up only after determination that the nodes involved have sufficient bandwidth to accommodate the anticipated cell rate, overloads can be avoided and the cell delay minimized.

It therefore will be appreciated that, in essence, an ATM communication involves setting up a virtual connection identifying a sequence of nodes extending between a source and a destination, and dividing the message into cells of equal length. The cells of the message are subsequently transmitted over the virtual connection, which may include each or all of wire conductors, optical links, or satellite relay links. At the ultimate destination, the headers of the cells are removed, the payloads are reassembled, returned to analog format when appropriate (e.g., in voice communication), and delivered to the user.

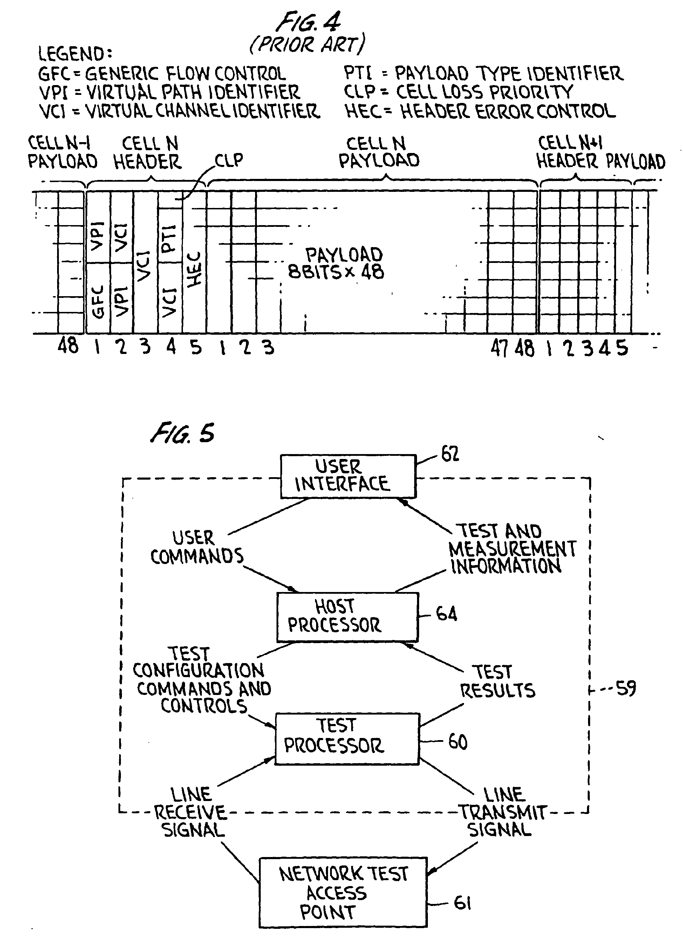

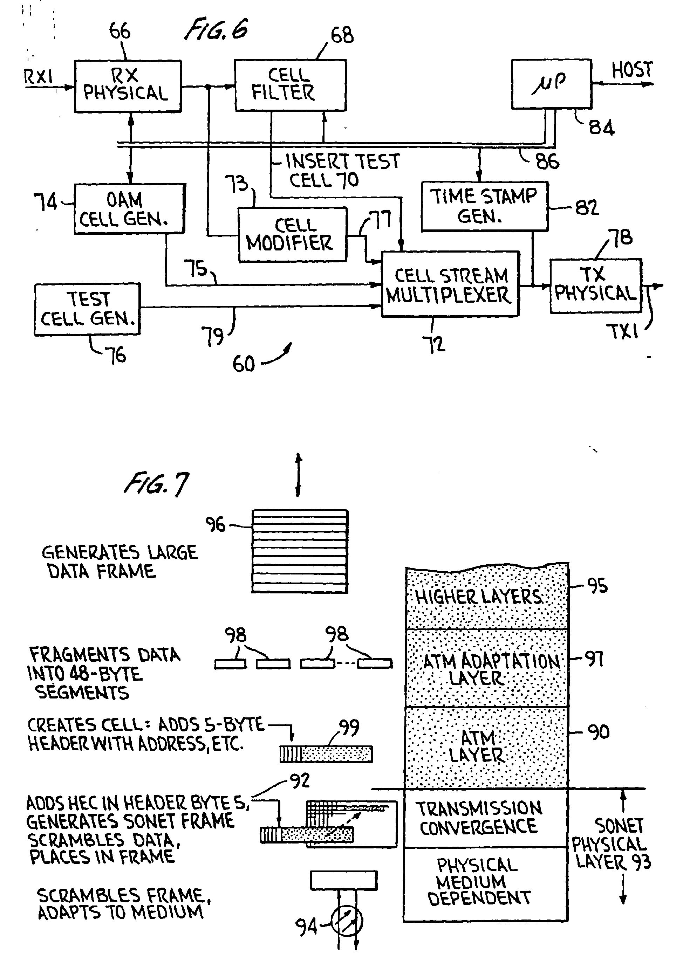

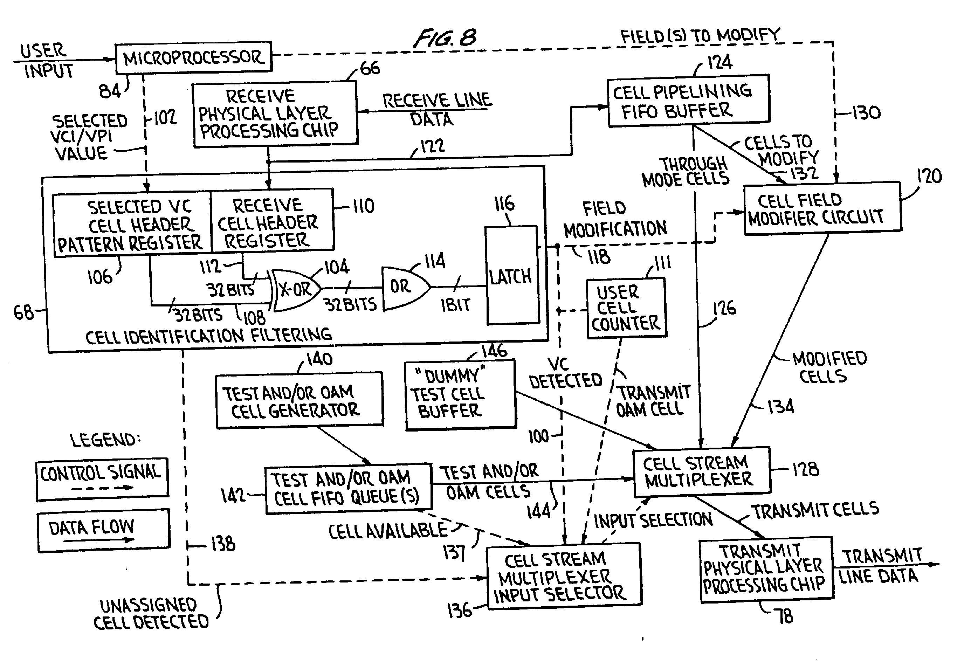

The basic format of the fixed-length ATM cell (a "cell" corresponding generally to a "packet", as that term is usually used), includes a header consisting of five eight-bit bytes (or "octets"), these including cell payload type and routing information, followed by 48 bytes of pay load. Various standards organizations have agreed on the format of the header and the overall cell structure. See, for example, "ATM Pocket Guide", a publication of Tekelec of Calabasas, California. As shown therein, and as reproduced by Fig. 4 hereof, the ATM header of each cell includes at least 24 total bits of routing information, comprising 8 bits of "virtual path identifier" (VPI) information and 16 bits of "virtual channel identifier" (VCI) information.

In transmission of ATM cells, the VPI and VCI routing information in each cell header is updated at each node, responsive to predetermined information stored by each node at call origination. The VPI and VCI information stored in each cell at any given time is used by each node to route the cell to the next node in the series of nodes making up the virtual connection, as established at call origination.

More specifically, unlike a frame relay transmission, wherein the header information is unchanged as the packet transits the entire route from its originating source to its ultimate destination, in ATM, the VPI and VCI routing information in the header of each cell is updated as each intermediate node is transited.

As noted, each cell of any given ATM message transits the same virtual connection, that is, the same sequence of nodes. As part of the call origination process, information is stored at each node in the virtual connection, providing VPI and VCI information used to identify each incoming cell and update its VPI and VCI, so that the cell is properly switched to its next destination node in the virtual connection. Thus, as each cell is received at a node, its individual VPI and VCI information is examined by the node, and stored VPI and VCI information needed to convey that cell to the next node is used to update the header accordingly. It will therefore be appreciated that each node in an ATM network includes means for examining the header of each cell received and updating the VPI and VCI information accordingly.

The call origination process in ATM is well defined and need not be detailed here except to mention that when a call is originated, a series of "signaling" messages are passed back and forth between the originating source node, the intermediate nodes, and the ultimate destination node. The call origination process involves the sending of a message of predetermined format, indicating the relevant cell parameters, e.g., the total number of cells to be transmitted, and their anticipated rate of supply. Each node which receives this call set-up message considers the requirements of the call, e.g., the anticipated cell density, and the like, to determine whether it has bandwidth - that is, communications capability - sufficient to handle the anticipated number of cells. During this process each of the intermediate nodes ultimately forming part of the virtual connection to be thus established must in effect agree to the traffic requirements anticipated, and must store sufficient information to allow updating of the VPI and VCI as the cells of that message transit that particular node.

### Quality of Service Parameters

ATM users typically will agree with a service provider to provide a certain quality of service, involving, for example, pre-agreed limitations on the cell error ratio, that is, the number of cells including errors that can be tolerated for a given number of cells transmitted, the cell loss ratio, that is, the number of cells that the network may fail to transmit for a given number of cells transmitted, as may occur due to oversubscription, and other parameters of operation. These parameters are agreed upon depending on the anticipated traffic. For example, voice and video communications typically can be effectuated allowing rather higher bit error rates than data communications; voice and video, however, are more sensitive to variation in cell delay than are data communications. Accordingly, these and other parameters must be measured in use, with respect to specific virtual connections, in order to ensure that the service contracted for is met by both user and service provider.

Furthermore, it is desirable to measure specific statistics of the network's operation, such as the frequency of occurrence of various types of cells, in order to optimize network utilization. For example, the cell headers include indications of cell loss priority which can be raised by the network when a user exceeds the parameters of the corresponding traffic contract; the frequency of occurrence of high cell loss priority indication can accordingly be monitored to ensure that the network is not being overutilized.

U.S. Patent 5,343,463 to van Tetering et al discusses methods for measuring the performance characteristics of a path of an ATM telecommunications switching network by generically transmitting test packets (cells) while other live traffic is operating. U.S. Patent 5,271,000 to Engbersen et al discloses a method and apparatus for testing and evaluating distributed networks by transmitting generic test packets through the network to a test packet analyzer where the transmitters are located at geographically distributed locations with respect to the analyzer. U.S. patent 5,457,700 to Merchant et al shows a test cell generator for inserting test cells in place of idle cells in an ATM network. As idle cells do not include VPI and VCI information assigning them to a virtual connection, Merchant, as in the cases of Van Tetering and Engbersen, is not capable of measurement of network performance with respect to a particular virtual connection. None of these references show systems capable of tracking transmission of a particular cell through the network.

### Objects of the Invention

It is therefore an object of the invention to provide an instrument and method for identifying the cells belonging to an individual virtual connection, for replacing these specific cells at a first test access point with predetermined test cells, and for detecting these test cells at a second test access point.

For example, in order to measure cell transfer delay, two-point cell delay variation, round trip travel time, the quality of service parameters enumerated above, and other relevant parameters of network operation with respect to one or more selected virtual connections, "live" cells identified in a cell sequence as belonging to a selected virtual connection may be replaced by predetermined test cells injected into the cell stream at a first access point by a first test instrument and detected by a second instrument at another access point to monitor their transmission. Due to the asynchronous nature of ATM communication, the rate of transmission of cells with respect to any virtual connection may change instantaneously, and may vary widely subject to the maximum rate possible on the specific transmission medium. It is accordingly an object of the invention to provide a first test instrument capable of inserting test cells in place of the identified cells of a selected virtual connection, in order to avoid disturbance of the cell transmission rate of the virtual connection. This process performed with respect to a particular virtual connection according to the invention is referred to as "rate-matched cell identification and replacement".

More specifically, normally continuous streams of cells are transmitted in both directions between pairs of nodes in the network. When there is no user traffic to be transmitted, "unassigned" or "idle" cells are transmitted. In order to avoid loss of user cells, and in order to avoid corrupting user data, it is often preferable to transmit test cells in the "cell slots" in which unassigned or idle cells would otherwise be transmitted. Therefore, it is also an object of the invention to provide an instrument and method for identifying "unassigned" or "idle" cells in addition to the cells belonging to an individual virtual connection. Preferably, the unassigned or idle cells are replaced with test cells configured as "operations, administration, and maintenance" (OAM) cells, which are treated differently by nodes in the network than ordinary "user" cells. The OAM-configured test cells perform functions associated with OAM cells, e.g., measuring the quality of service parameters associated with an in-service virtual connection. This process performed according to the invention is referred to as "rate-matched insertion" of test cells into a virtual connection.

According to a further object of the invention, one or more bits of a user cell may be modified, constituting that cell a test cell. For example, a bit of the header may be altered to test the header error correction circuitry provided at the individual nodes.

### Summary of the Invention

The above objects of the invention and others which will appear as the discussion below proceeds are provided by the present invention, according to which an instrument for measuring statistical characteristics of traffic in an asynchronous transfer mode (ATM) communication network, as claimed in claim 1, is provided. An associated method, as claimed in claim 5, and a statistics processor for employment in a test instrument for monitoring operation of a communication network, as claimed in claim 7, is also provided.

The test instrument of the invention comprises a cell filter for examining headers and partial payloads of all cells transiting the network, to identify, for example, assigned cells belonging to specific virtual connections, or for identifying operations, administration, and maintenance (OAM) cells also transmitted by the network from time to time. The cell filter may be implemented by combinatorial logic, such as a number of exclusive-OR gates, or by a content-addressable memory (CAM).

### Brief Description of the Drawings

The invention will be better understood if reference is made to the accompanying drawings, in which:
Fig. 1 shows a schematic overview of a network for ATM traffic communication;
Fig. 2 shows a schematic diagram of the mechanism whereby a node updates the VPI and VCI information of each ATM cell it processes;
Fig. 3, including Figs. 3 (a) - 3(c), shows three possible methods of connecting a test instrument to the test access port of a network node;
Fig. 4 shows schematically the layout of a typical ATM cell according to the standardized ATM format used in the industry;
Fig. 5 shows schematically the components of a test instrument according to the invention;
Fig. 6 is a block diagram of the principal components of the test processor of a test instrument according to the invention;
Fig. 7 shows a diagram indicating the way in which ATM communication conforms to the industry-standard open systems interconnection (OSI) model;
Fig. 8 shows a schematic diagram of the principal components and steps involved in rate-matched cell identification, cell modification, cell replacement, or OAM cell insertion processing according to an embodiment outside the scope of the appendant claims;
Fig. 9 shows a block diagram of a test processor as provided in an implementation of the instrument of the invention as used for collecting statistics characterizing network operations; and
Fig. 10 shows a detail of a microsequencer comprised by the test processor of Fig. 9.

### Description of the Preferred Embodiment

As discussed above, the present invention relates to a test instrument and associated methods for measuring operational parameters of interest in an ATM communication network.

The instrument of the invention can be used to identify cells belonging to a specified virtual connection and either modify the identified cells, replace the cells with test cells, or augment the cells with additional OAM-configured test cells. The test cells are then transmitted over the virtual connection previously established. The test cells are typically detected at a second node, so as to monitor the pertinent parameters of their transmission.

The following provides certain additional information helpful in understanding the precise nature of the technical problems to be addressed by the invention, prior to discussion of the manner in which the invention resolves these problems.

As indicated above, asynchronous transfer mode (ATM) transmission of data (including in "data" voice, images, and video, digitized as necessary, as well as data per se) involves the segmenting of all messages to be transmitted into equal-length "cells" that are time-multiplexed over a communication link (i.e., cells from plural sources are transmitted in "cell slots" as available) at a source. Each cell of a given message is transmitted over the same sequence of nodes and links, termed a "virtual connection", to the destination of the particular message. (It will be appreciated that a "virtual connection" as used herein is referred to as a "logical channel" in certain references.) The virtual connection is established at a call setup time, begun when the originating source node transmits a first message including information as to the bandwidth required for transmission of the message. Candidate intermediate nodes then determine whether they can satisfy the bandwidth requirements of the traffic, and may negotiate these parameters if necessary. Ultimately, a virtual connection is established by storing next-node destination information in content-addressable memories (CAMs) or other circuitry comprised by each of the nodes; that is, VPI and VCI information pertaining to each segment of the virtual connection of which a given node is a component is stored at call origination, such that the routing information of each cell is updated as it passes through each of the nodes included in the virtual connection.

As the individual cells of a particular message transit the network, they may be multiplexed several times, e.g., from a relatively low speed local area network into a much higher speed wide area network. The links connecting the nodes may include conductive wires, optical fibers, and/or satellite transmission links. The streams of cells received at the ultimate destination nodes are demultiplexed and presented to the users connected to the ultimate destination node. Because each of the cells of a particular message transits the same sequence of nodes making up the virtual connection, each of the cells should arrive in its proper order. However, commonly the ultimate destination node will assemble the various cells of the message in a buffer, and strip off the header information and other non-message components of the cells, such that the entire message can be accessed in a single operation.

### Rate Matching in a Virtual Connection

The transmission rates of the ATM cells in aggregate vary greatly with the medium involved in each link. At a local area network level, the transmission rate may be typically up to 10 Mbits/sec, that is, 10,000,000 bits per second, the standard "Ethernet" rate typically used for twisted-pair copper wire communication. Over high speed optical data fibers conforming to the known SONET optical network protocol, the bit rate may be up to 622 Mbits/sec. Higher rates are also planned.

Pairs of nodes in the network connected by links normally transmit a continuous stream of assigned and unassigned ATM cells at a fixed rate in both directions over the links, in order to maintain system synchronism. When there is no user traffic to be transmitted, "unassigned" or "idle" cells are transmitted. Such unassigned or idle cells may be replaced with OAM test cells according to the invention. More specifically, and according to an important aspect of the invention, cells belonging to a specific virtual connection in the continuous stream of cells passing between pairs of nodes in the network are modified, augmented with OAM cells, or replaced by test cells.

As noted above, a distinction exists between asynchronous communication, i.e., ATM, wherein various users may seek to transmit messages at any time, so that cells are assigned time slots as needed, and synchronous communication, i.e., STM, where all users retain permanently assigned time slots in a sequence thereof. In STM, it is a simple matter to perform rate-matched processing; the correct time slot is identified by counting time slots from a synchronizing indication that is regularly transmitted, and a test packet inserted in the stream at the corresponding point in time. Transmission of the test packet through the network can be traced similarly. In ATM, the cells of a particular virtual connection cannot be expected to be located in any particular time slot and must be identified by individual examination thereof.

Furthermore, as noted, intrinsic to ATM communication is the fact that cells need not be transmitted between any identified source and destination at any given time. Therefore, various important network transmission parameters, such as the average cell transfer delay, the cell delay variation, and the size and rate of bursts of cells, each to be measured with respect to a particular virtual connection, can only be meaningfully monitored if the rate of transmission of cells is not varied as a consequence of the measurement process. Accordingly, in order that a test instrument containing the invention can be employed without excessive interference with network operations, it is necessary that the cell modification or cell replacement process be performed in a "rate-matched" fashion, i.e., test cells configured as user cells must be replacements for or modifications of user cells, in order to match their rate of transmission. This process, referred to herein as "rate-matched" cell identification and cell modification or cell replacement, depending on the operation to be performed, allows known test cells to be inserted into the stream for detection elsewhere in the network for monitoring network parameters. For certain tests, the stream of user cells need not be altered; in these cases, unassigned or idle cells can be replaced with OAM-configured test cells without affecting transmission of user cells. Further, in order that the sequence of user cells is not disrupted, all cells passing through the node to which the test instrument is connected must be delayed identically, if at all.

In order to satisfy the objects of the invention mentioned above, it is therefore necessary to provide a test instrument having the capability of recognizing cells with respect to their respective virtual connection and replacing or modifying the identified cells at speeds of up to the 622 Mbits/sec and higher rates available over optically-linked nodes. The high speed recognition capability provided by the test instrument of the invention is employed for rate-matched modification, replacement, or insertion modes of operation, e.g., in order to recognize cells belonging to a virtual connection of interest and replacement thereof in the message stream by test cells.

### Topology of an ATM network

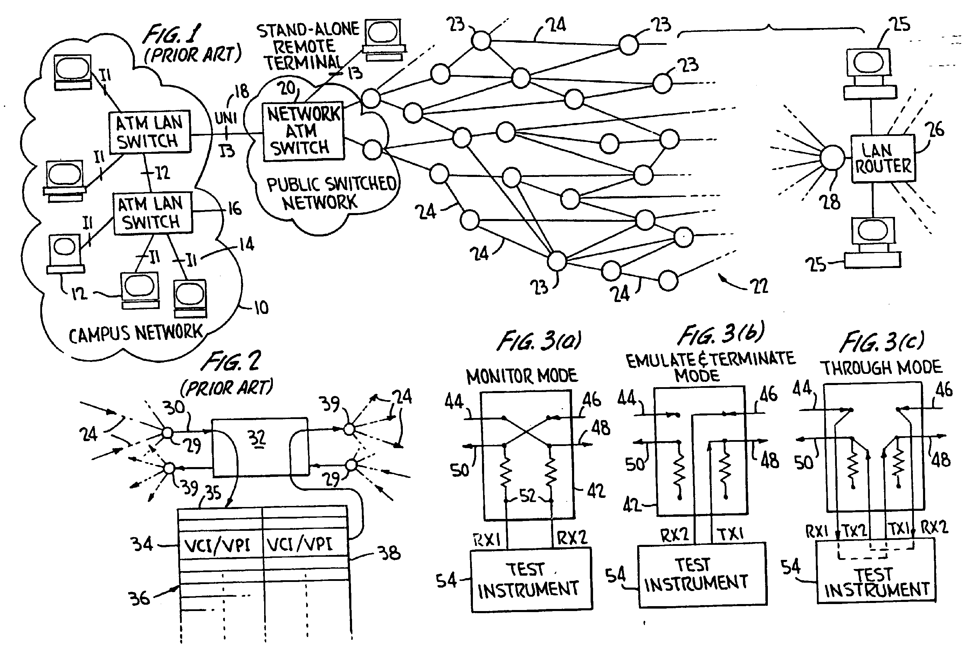

Fig. 1 shows in schematic form the overall arrangement of an ATM network, exemplified by the connection of a local area network 10, that is, a number of individual computers 12 interconnected by well-known local area network hardware, to a wide area ATM network indicated generally at 22. For example, a local area network 10 may exist on a college campus or the like, as indicated. The local area network (LAN) comprises a number of individual computers 12 each connected by LAN interface units 14 to ATM LAN switches 16. The ATM LAN switches 16 provide communication between computers 12 of the LAN 10, and also identify cells intended for destinations outside the LAN 10 and convert these to ATM cells, a process which will be detailed further below. LAN 10 is connected by an ATM user network interface 18 to wide area network 22 by way of an ATM switch 20. Network ATM switch 20 is thus a "gateway" node to the wide area ATM network 22. Network 22 comprises a large number of intermediate nodes 23 connected by a large number of links 24. ATM traffic may also be originated by digital telephone equipment, video conference equipment, or other known devices.

As indicated above, various nodes 23 transmit at differing transmission rates and are connected by correspondingly-varied media, i.e., links 24. Low speed nodes may be connected by wire conductors; more commonly, and especially in new installations, optical fibers are being used to connect high speed nodes so as to enable very high speed data transmissions from point to point. Satellite links may also connect various nodes.

As noted above, as a rule, an overall message to be transmitted over the ATM network, which may be a few seconds of digitized voice or video, or data per se, is divided into a large number of cells of identical format. The individual cells are generated by an ATM switch serving as a gateway node 20. Each cell is provided with initial VPI and VCI information at the gateway node, which is used to direct it to the first intermediate node in its virtual connection. As the cells transit the wide area network 22, their VPI and VCI information is updated at each node 23 until the cells reach a similar network ATM switch serving as a destination node 28 connected to the ultimate destination of a particular message. The ultimate destination may be a computer 25, similarly part of a local area network by virtue of being connected to a LAN router 26, in turn connected to destination node 28. As indicated, the structure and operation of the ATM network is well known and is defined by a variety of different standards describing the interfaces between the various classes of nodes, links, LANs, and other components involved.

Fig. 2 shows schematically the updating of each cell at each node in a normal ATM connection. Cells arriving on an incoming line 30 reach the node 32. More specifically, streams of incoming cells are received over a plurality of links 24, and are multiplexed by a switch 29 to provide a single stream of cells via line 30, to each node 32. Each incoming stream of cells will typically include cells from a number of virtual connections. As discussed above, and in further detail below, each ATM cell includes a 5-byte header, including VPI and VCI routing information identifying the next node in the virtual connection established for the cells of each message.

The VPI and VCI of the incoming cells, shown schematically at 34, are supplied to the comparand register 35 of (typically) a content-addressable memory (CAM) 36. When correspondence between the VPI and VCI of the incoming cell and the contents of the CAM 36 is detected, the CAM outputs updated VPI and VCI routing information from data stored at 38 at call set-up with respect to each virtual connection. The new VPI and VCI then become part of the header of the outgoing cell, and are used to similarly identify the cell at the next node. A multiplexing switch 39 forming the connection of each node to a plurality of outgoing links 24 is controlled such that each cell is transmitted over the correct link to reach the next node in the virtual connection.

Thus, as discussed above, at each node in a virtual connection, the VPI and VCI of the incoming message are updated to indicate the next node in the network to which that particular cell is to be transmitted. The correspondence between the "incoming" and "outgoing" VPI and VCI information is established at call origination and stored in each node forming part of a virtual connection established for each message by exchange of a sequence of call set-up messages between an ultimate source node and an ultimate destination node. While the capability of updating the VPI and VCI routing information of each cell at each node can be provided using other circuit components, currently preferred node designs typically use CAMs in each node to provide the VPI and VCI updating at very high speed. Nodes having this capability are within the skill of the art as of the time of filing of this application. See U.S. patents 5,414,701 to Shtayer and 5,422,838 to Lin.

In the embodiment shown, the nodes themselves each comprise routing intelligence, that is, for responding to call set-up messages to establish virtual connections. However, the invention would also be useful in evaluating a network designed such that one or more central routers determined the sequence of nodes and links to be traversed by the cells of each message, i.e., to define the virtual connections.

### Methods of Test Access

Figs. 3(a) - 3(c) show three different methods whereby a test instrument according to the invention can be connected to a conventional preexisting node 42 of an ATM network, using, in this example, electrical wire connections. As shown, node 42 is connected to two incoming lines 44 and 46 and two corresponding outgoing lines 48 and 50, respectively. As shown in Fig. 3(a), the test instrument 54 may be connected to two test port terminals 52 in a "monitor" mode of operation of the test instrument of the invention. In this mode, network service is undisturbed; the test instrument simply monitors traffic through the node and may perform various tests, maintain network operation statistics, and the like, without affecting flow of traffic.

In an "emulate and terminate" mode shown in Fig. 3(b), the test instrument effectively terminates incoming line 46 and originates traffic over transmit line 48. In this mode of operation, the test instrument effectively takes the node out of service.

Finally, in a third "through" mode, shown in Fig. 3(c), the test instrument is interposed in the traffic path between the incoming lines 44 and 46 and the corresponding outgoing lines 48 and 50. Rate-matched cell identification and modification, and replacement and insertion of test cells according to the present invention, are performed with the instrument connected in the "through" test access mode of Fig. 3(c). For purposes of the present invention, the test instrument can be interposed in the cell flow path before or after the updating of VPI and VCI information at each node, although it will be apparent that the VPI and VCI information supplied to the instrument will vary accordingly.

In the "through" mode, all traffic passing through node 42 is delayed by a fixed period of time, typically an integral number of cell time slots, varying with the rate of transmission of the cells at that particular point in the network, to enable test instrument 54 to carry out the appropriate processing steps. It will be apparent that it is desirable that all traffic be delayed identically so that the order of cell transmission is not disturbed. Further, it is important that the delay be as short as possible.

Note that networks linked by high speed fiber optic lines may be accessed in a conceptually similar way, although there are no currently standardized methods for providing test access to nodes in fiber optic networks.

In each of Figs. 3(a) - 3(c), and below, the ports at which the test instrument 54 receives traffic from the node are labeled RX1 and RX2, while the ports through which the test instrument transmits data back to the node for transmission over the network are referred to as TX1 and TX2.

### Format of an ATM Cell

Fig. 4 shows the format of the typical ATM user cell. As discussed above, each ATM cell includes 53 8-bit bytes, that is, includes a 5-byte header and 48 bytes of payload. The payload may contain user data in the case of normal user cells or control information, in the case of operations, administration, and maintenance (OAM) or resource management (RM) cells. The individual cells in a stream of cells may be separated by additional cell delineation bytes of predetermined format, depending on the medium of transmission being employed.

Within a LAN, for example, and at the ATM User Network Interface (UNI) 18 (Fig. 1), the first byte of the header includes four bits of generic flow control (GFC) information, followed by four bits of virtual path identifier (VPI) information. Within the wide area network, the GFC bits are typically replaced with four additional VPI bits. VPI information also makes up the first four bits of the second byte, which is followed by four bits of virtual channel identifier (VCI) information. All eight bits of the third byte of the header include VCI, as do the first four bits of the fourth byte. The 24 (or 28) total bits of VPI and VCI together comprise routing information for the cell. Where the cell is an unassigned or idle cell, the VPI and VCI bits are all set to zero; the test instrument of the invention is capable of recognizing this and inserting an OAM-configured test cell in place of an unassigned or idle cell. The fifth, sixth, and seventh bits of the fourth byte of the cell header are payload type identifier (PTI) bits, which typically indicate whether the payload of the cell includes user data, whether the segments of the network through which the cell has traveled have experienced congestion and the like, or whether the cell is a "OAM" cell, used for control of network operation, administration, and maintenance. The last bit of the fourth byte is a cell loss priority (CLP) bit, a "1" indicating that the cell is subject to discard in the event of network congestion or the like. Where the VPI and VCI fields are all zeroes, the CLP bit differentiates between idle and unassigned cells. Finally, the fifth byte of the header includes header error control (HEC) data used to reconstruct the header if a single bit error is detected within the cell header by any of the nodes along a virtual connection.

Again, as discussed above, the VPI and VCI information included in the header of each ATM cell is updated at each node as the cell transits its virtual connection from its originating source node to its ultimate destination node. More specifically, each node stores VPI and VCI information corresponding to each virtual connection then being supported. When the sequence of nodes making up the virtual connection is determined at call origination, the VPI and VCI information of the incoming cells is stored by each node in association with the corresponding VPI and VCI information to be written into the header of each cell, so as to update the network routing information of each cell as each node is transited.

The test instrument of the invention is therefore capable of examining incoming cell VPI and VCI information to identify the cells belonging to particular virtual connections, e.g., for replacing such cells, modifying one or more bits thereof, or augmenting the stream of cells with OAM-configured cells, thus providing a stream of test or OAM cells for being similarly identified by a second instrument elsewhere in the virtual connection. In this case, the test instrument of the invention is connected in the through mode of Fig. 3(c), wherein all traffic through a particular node passes through the test instrument. For example, some or all of the cells from a particular virtual connection may be detected and replaced with test cells, to monitor the quality of service and other characteristics between particular nodes in the network. Alternatively, unassigned cells may be identified and replaced by OAM-configured cells to avoid impacting an in-service virtual connection, e.g., to measure cell error ratio or the like. The cell payload type information included in the PTI field can be examined by the instrument of the invention at each test access point to differentiate between user and OAM cells. This facility is employed by the invention, e.g., to measure network performance with respect to a particular virtual connection, e.g., cell loss ratio, cell misinsertion rate and the like.

### Contrasting Switched and Permanent Virtual Connections

The VPI and VCI information is normally arbitrary, in that it cannot be analyzed to identify the ultimate source of the cells, to identify the position of a cell in a sequence of cells, or the like. The VPI and VCI information also does not include a virtual connection identifier per se. However, it will be appreciated by those of skill in the art that certain VPI and VCI values are "reserved", e.g., for call origination messages. Candidate nodes identify the reserved VPI and VCI of call origination messages in order to respond to the call set-up query, i.e., to determine whether they can serve as part of a proposed virtual connection. Certain "permanent" virtual connections (as opposed to "switched" virtual connections established at call origination, as described) may also be established by permanent VPI and VCI assignments. Further, individual service providers may employ parts of the VPI field to indicate levels of service and the like.

### Test Instrument Functional Description

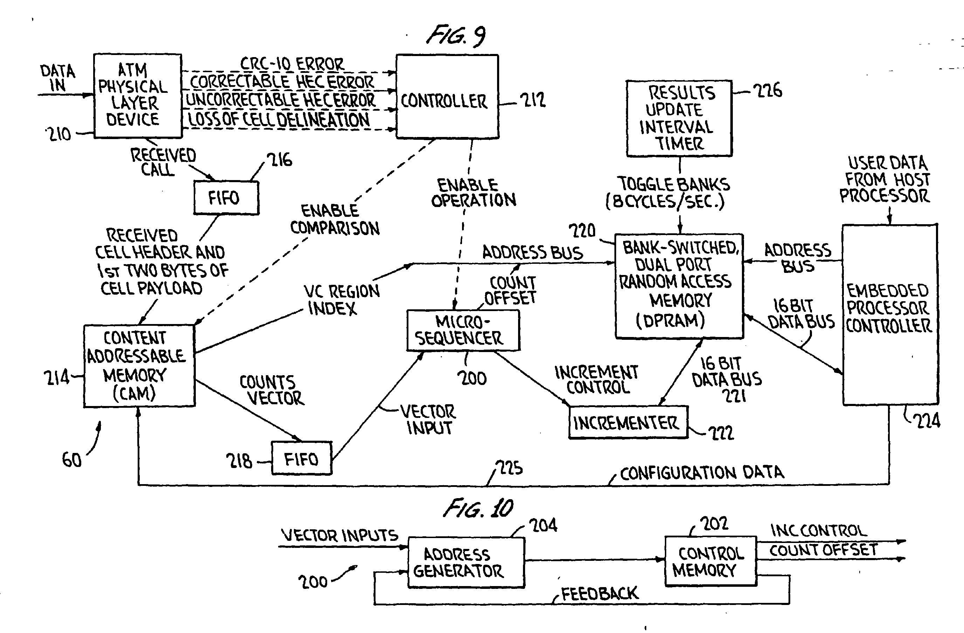

Fig. 5 shows a block diagram of the principal components of a test instrument 59 for carrying out the functions provided according to the invention. The processing steps required to carry out the various tests made possible according to the invention are performed in main part by a test processor 60 monitoring cells received from an associated node and transmitting a stream of user and test cells to the node. The test instrument is connected to the network via a network test access point 61, such as the test port 52 of Fig. 3(a). When desired, the test access point may include dual transmit and receive ports to allow bidirectional cell monitoring, as shown by Fig. 3(c). The same functionality can be provided in many cases by a single receiver port and single transmitter port test instrument as well.

The specific operations to be carried out by the test processor 60 are controlled by a user providing commands by way of a user interface 62 which is in turn connected to test processor 60 by a host processor 64. The host processor 64 provides the user with, for example, the ability to specify a virtual connection of interest, and to specify the type of test to be performed. The host processor also provides substantial processing capability with respect to test results and the like received by way of test processor 60. Test instruments including a user interface, a test processor, and a host processor are generally known; the invention in this case generally resides in the specific functions provided by and structure of the test processor 60.

As discussed, the test processor 60 identifies specific cells in a stream of cells by comparison of the VPI and VCI fields of each cell to information stored in the test processor. The stored information is provided by the user, who (for example) would key the information into the host 64 by way of a keyboard comprised by the user interface 62. The user in turn may obtain the VPI and VCI information from a system administrator, who assigns this information to each new virtual connection. The instrument may also store VPIs and VCIs received for a period of time, building a list of active connections. The user may then select one for analysis. A virtual connection may also be established specifically in order to test specific aspects of network operation, and the VPI and VCI then communicated to the user at the test instrument.

### Test Processor Block Diagram

Fig. 6 shows a functional block diagram of the principal components of the test processor 60. The test processor examines each incoming cell and carries out appropriate action in real time, that is, without significant delay of cells, long term storage, or the like. In a presently preferred embodiment, the test processor 60 comprises a "real-time embedded system" comprising dedicated hardware, one presently-preferred implementation being shown in further detail in Fig. 8.

Incoming cells are received by a receiver 66. The VPI and VCI fields of each cell are compared by a cell filter 68 to VPI and VCI information pertaining to a virtual connection of interest, as supplied by the user via the host 64, connected in turn to a microprocessor 84. For example, traffic between a particular source and a particular destination may have been identified as including an unacceptable cell error ratio or the like. Accordingly, the cell filter 68 would be supplied with the VPI and VCI information of the corresponding virtual connection, for comparison to that of incoming cells, to locate those belonging to the particular virtual connection of interest.

Where correspondence is detected, such that a cell belonging to a particular virtual connection is identified, an Insert Test Cell signal indicated at 70 is provided by the cell filter 68 to a cell stream multiplexer unit 72. The cell stream multiplexer unit 72 selects a test cell from one of several buffers or queues. For example, an OAM-configured cell provided by an OAM cell generator 74 to cell stream multiplexer 72 may be selected for insertion. That is, the inserted cell may include PTI information identifying the cell as an OAM cell (see Fig. 4), or may be configured as a normal user cell, depending on the specific test to be carried out. If a test cell configured as a normal user cell is to be transmitted, multiplexer 72 may select the test cell from test cell generator 76. One or more bits of the identified cell may also be modified by a cell modifier 73 connected to multiplexer 72, to configure that cell as a test cell.

Cell stream multiplexer 72 is supplied with the stream of cells passing through the cell modifier via a first line 77, with user-configured test cells to be inserted in place of identified cells in the stream of test cells from the test cell generator 76 via a second line 79, and with OAM-configured test cells from generator 74 via a third line 75. In the absence of the Insert Test Cell signal 70, that is, unless a test cell is to be interposed into the stream of cells, the stream of cells passes unaltered from the receiver 66 through cell modifier 73 to cell stream multiplexer 72. The stream of cells flows from the multiplexer 72 to a transmitter 78, where the stream of cells is reconfigured for serial transmission as necessary and returned to the network via port TX1.

The particular test operation to be performed is controlled responsive to user commands provided to host processor 64 (Fig. 5) connected in turn to microprocessor 84, communicating control signals to the principal components of the test processor via bus 86. For example, where a time stamp is to be provided as part of measurement of the round trip travel time of a test cell, this information is inserted into the payload of the test cell by a time stamp generator 82 connected downstream of the multiplexer 72, as shown. The test instrument of the invention may be employed for measuring various statistics of interest in monitoring network operation.

The cell filter 68 can be implemented in at least two ways. The basic function of the cell filter is to compare stored VPI and VCI information, for example, representative of cells belonging to a particular virtual connection, to the VPI and VCI of each incoming cell. Where cells belonging to a particular virtual connection need simply be identified, e.g., for replacement or modification, or for measurement of the size and rate of bursts of cells from a particular virtual connection, the cell filter may be implemented using combinatorial logic and associated registers, as shown in Fig. 8 and discussed in detail below. Where one or more characteristics of the cells are to be monitored, or where cells from a number of virtual connections are to be identified, a content-addressable memory (CAM) as shown in Fig. 9 is the preferred implementation of the cell filter 68.

### The OSI Seven Layer Model

The receiver 66 and transmitter 78 in Fig. 6 both perform functions usually termed part of the "physical layer" of a communication device. The "physical layer" nomenclature refers to the first layer of an industry standard model of communications referred to as the "Open Systems Interconnection" (OSI) model. According to the OSI model, communications functions are divided between seven "layers", each comprising hardware and software and having standard interfaces, defined such that the components (hardware and software) implementing each layer can be replaced and upgraded as necessary without affecting the others. The principal functions of the physical layer are deframing, physical overhead removal, and cell delineation. The physical layer thus identifies the cells within the continuous bit stream received from the node and presents these cells to the ATM layer. Layer 7, the highest layer in the OSI model, is referred to as the application layer, and may for example constitute software whereby a human user indicates that a message is to be sent. Layers 6, 5, 4, and 3 are increasingly-detailed layers the specifics of which are not of direct relevance to the present invention. The ATM protocol processing occupies the link layer, layer 2.

Fig. 7 shows an example of the application of ATM within the OSI model. As noted, the lowest layer, layer 1, is the physical layer. In the example of Fig. 7, this physical layer is exemplified as an optical fiber transmitter indicated at 94. At the second or ATM layer 90, ATM cells are created and formatted according to the particular protocol employed by the medium. In this example, the cells are formatted into "frames" conforming to a SONET protocol used commonly at the physical layer for optical fiber transmission. More specifically, as indicated further in Fig. 7, the higher layers 95 generate a large data frame 96; that is, the message to be transmitted is provided by the higher layers 95. At the ATM adaptation layer 97, the frame 96 is fragmented into 48-byte segments, corresponding to payloads of cells, as indicated at 98; headers are added at 99, providing the VPI and VCI address information, and completing the cells. The Fig. 7 example presumes the cells are to be transmitted over optical fiber according to the SONET protocol. Accordingly, the cells are placed in a SONET frame at 92 (whereby a number of cells may be transmitted between SONET nodes, without individual routing, for example) and transmitted by transmitter 94 at the physical layer 93, as indicated.

Correspondingly, when a cell is received by the test instrument, the physical layer device of the node organizes the serial stream of bits transmitted by the physical medium as an 8-bit wide by 53 byte long cell as shown in Fig. 4.

### Rate-Matched Cell Modification, Replacement, and Insertion

User cell modification, replacement of user cells identified as belonging to particular virtual connections, and replacement of unassigned or idle cells with test cells, which may be configured as OAM cells, all to be performed in an appropriately rate-matched manner, are particular objects of an embodiment that falls outside the scope of the appendant claims. Fig 8 shows a detailed functional block diagram of one implementation of the test processor employed to perform the relevant functions, as well as the flow of cells and control signals. The Fig. 8 implementation corresponds generally to the block diagram of Fig. 6; it will be recognized that numerous alternatives are possible.

As shown in Fig. 8, the incoming data is received by a physical layer receiver 66. The data is supplied to a cell identification and filtering unit 68. where correspondence between a cell and stored VPI and VCI information is detected, a "VC-Detected" control signal on line 100 is provided to a cell stream multiplexer input selector 136. More specifically, selected VPI and VCI values are provided at 102, e.g., by the user via microprocessor 84, and stored in register 106. (Where an unassigned or idle cell is to be replaced, these values are all zeroes, as noted.) The cell identification and filtering unit 68 compares the stored cell identification information to the corresponding fields of each cell received. When correspondence is detected, the VC-Detected signal is provided on line 100 and triggers, for example, modification of the cell or its replacement by a test cell. The cell identification and filtering unit 68 can similarly identify unassigned or idle cells, and trigger insertion of an OAM-configured test cell in their place.

In the embodiment shown in Fig. 8, the cell filter 68 is implemented by combinatorial logic, that is, discrete circuit elements, in this case 32 exclusive-OR gates 104. As is well known by those of skill in the art, the OR of the outputs of a set of exclusive-OR gates provide a positive active-low output only when all of the inputs to the exclusive-OR gate match a specified pattern. In this application, the selected VCI/VPI values are stored in a first input register 106 and form one set of inputs supplied to the exclusive-OR gates on a 32-bit input bus 108. The corresponding VPI and VCI values from the incoming cells are stored in a second input register 110 and are supplied by a second 32-bit input bus 112 to the exclusive-OR gates 104. When all of the bits stored in the two registers 106 and 110 match, the exclusive-OR gates 104 provide 32 identical output signals to an OR gate 114, which in turn provides a one-bit output signal to a latch 116. The "low" output of latch 116 comprises the VC-Detected signal 100, and is also supplied as a Field Modification control signal 118 to a cell field modifier circuit 120, and to a user cell counter 111.

The incoming cells are also supplied by way of line 122 to a pipelining first-in first-out (FIFO) buffer 124, where they are stored for a fixed number of cell slots. In the event the cells are not to be replaced or modified, they are supplied from buffer 124 via "through-mode cells" line 126 to cell stream multiplexer 128. Multiplexer 128 is a switching device for supplying the cell to be transmitted in each cell slot to transmitter 78.

Whether a particular identified cell (or all of a group of similar cells) is to be modified or replaced is controlled by a Fields to Modify signal provided by microprocessor 84 on line 130 responsive to user commands. Where one or more received cells are to be modified responsive to the Field Modification control signal 118, and responsive to the Fields To Modify signal on line 130, the cell then stored in the pipelining FIFO buffer 124 is directed to the cell field modifier circuit 120 by way of a Cells to Modify line 132. One or more bits of the incoming cell are accordingly set, reset, or inverted by the cell field modifier circuit 120 and provided as a modified cell on line 134 to multiplexer 128.

By comparison, where the identified cells are to be replaced with test cells, multiplexer 128 may select an appropriate test cell from several sources, responsive to an Input Selection signal provided by a cell stream multiplexer input selector 136, again responsive to a test selection made by the user. For example, where an unassigned cell is detected by the cell filter 68, as indicated at 138, an OAM-configured test cell can be placed in the cell stream in place of the unassigned cell. OAM-configured test cells can also be inserted into the cell stream at regular intervals measured by counter 111, which maintains a count of the user cells detected between OAM cells corresponding to a particular virtual connection. A test and/or OAM cell generator 140 provides a sequence of test cells, which may be configured as user or OAM cells, to a test and/or OAM cell FIFO queue unit 142. The test and/or OAM cells are provided to the multiplexer 128 via line 144. Alternatively, a dummy test cell can be provided from a buffer 146 to the multiplexer 128, in the event no test cell is currently available from the queue unit 142.

Where, for example, a particular virtual connection has been identified as experiencing problems, the VPI and VCI fields of each cell are examined by the cell identification filter 68 to identify cells from that particular virtual connection. The "VC-Detected" signal indicating detection of a match is provided to cell stream multiplexer input selector 136. The cell stream multiplexer input selector 136 is also supplied with a Cell Available signal on line 137 from test/OAM cell FIFO queue 142. Thus, when both the VC-Detected and Cell Available signals, on lines 100 and 137 respectively, are active, the multiplexer 128 injects a test cell from the test cell queue 142 in place of the corresponding user cell in the stream of through mode cells on line 126, thereby replacing the user cell.

Similarly, if user input has been provided indicating that OAM-configured test cells are to be transmitted when possible, when both the Unassigned Cell Detected and Cell Available signals, on lines 138 and 137 respectively, are active, the multiplexer 128 injects an OAM-configured cell from the OAM cell queue 142 in place of the corresponding unassigned cell in the stream of through mode cells, thereby inserting an OAM-configured test cell into the cell stream. OAM cells can also be transmitted at regular intervals determined by counter 111, as discussed further below.

As noted, dummy test cells stored in buffer 146 are selected by multiplexer 128 to replace dropped user cells when the test and/or OAM cell generator 140 is not capable of cell generation at the rate of the virtual connection being dropped.

Finally, in the absence of either of the VC-Detected or Unassigned Cell Detected signals, multiplexer 128 passes the through mode received cells from the cell pipelining FIFO buffer 124 unaltered to the physical layer transmitter 78.

In some cases, alteration of one or more bits of a particular cell or cells within a virtual connection constitutes that cell a test cell for the purposes of the present invention. For example, a header bit may be altered to test the next node's header error detection and correction facility. To this end, a cell field modification unit 120 is provided. Cell field modification unit 120 is connected between cell pipelining FIFO buffer 124 and the cell stream multiplexer 128 as shown. Each cell received by the test processor is stored in cell pipelining FIFO buffer 124 for a fixed number of cell slots, while the cell is simultaneously examined by cell filter 68, until it is time for the cell to be transmitted. An altered or replacement test cell is transmitted, as above, or the cell stored in cell pipelining FIFO buffer 124 is transmitted unaltered. As noted, one or more bits may be altered by the cell field modification unit 120, where this is sufficient to constitute the modified cell a suitable test cell.

Finally, as noted, a continuous stream of ATM cells is transmitted between each linked pair of nodes at any given time, each cell occupying a cell slot, that is, a unit of time. In order that the system can remain synchronized, it is important that a continuous stream of cells is transmitted. When there is no user traffic to be transmitted, "unassigned" or "idle" cells may be transmitted; such unassigned and idle cells include an indication in their headers that they do not contain user data, i.e., their VPI and VCI are all zeroes. Such cells are the first choice for replacement by OAM-configured test cells according to the invention. Use of OAM-configured test cells is discussed further below.

Summarizing the operation of the instrument according to the embodiment , all cells passing through a particular node are examined by the cell filter 68. The cells of one or more virtual connections are replaced by test cells, may have one or more bits modified, may have a time stamp inserted, may be augmented with or reconfigured as OAM cells, may have individual identifiers inserted in their payloads, or the like. In order that network synchronism is not disturbed, all cells passing through the node are delayed by an equal finite deterministic period, typically four cell slots, to provide time, for example, for replacement of identified cells with test cells according to the invention. For this reason, cells to pass through the node unaffected, as well as cells to be modified, are stored in the cell pipelining FIFO buffer 124 so that they can be transmitted at the appropriate time.

Depending on the specific test cell to be inserted into the cell stream, as noted above, either a single bit of a received cell may be altered, multiple bits may be altered, or the entire cell may be dropped and replaced with a predetermined test cell. Commonly, but not in every case, such predetermined test cells are configured as OAM cells, as OAM cells can be inserted into an in-service virtual connection without affecting transmission of user cells. Test cells may also be configured as user cells, or as resource management (RM) cells, depending on the test to be performed. RM cells may be transmitted for recognition at a virtual source/virtual destination (VS/VD)-capable node within the network. A VS/VD-capable node has the ability to loop-back RM cells (i.e., transmit it back to the node from which it was received). Various tests can therefore be carried out using a single instrument according to the embodiment by judicious selection of RM-configured test cells.

Accordingly, when a particular cell is identified in the stream of cells by the cell identification filter 68, the cell, having been simultaneously stored in the cell pipelining FIFO buffer, may be altered in a cell field modification unit 120 in response to a field modification control signal 118, or the cell may be discarded entirely and replaced responsive to VC-Detected signal 100. In the latter case, a test and/or OAM cell may be selected from a queue thereof stored at 142, having been generated by a test and/or OAM cell generator unit 140. In response to the control signals received, the cell stream multiplexer 128 selects for each cell slot the original cell stored in the cell pipelining buffer 124, an altered cell received from cell field modification unit 120, a test cell or an OAM cell received from the queue 142, or a dummy test cell from buffer 146. The selected cell is directed to the transmitter 78 for re-serialization and transmission to the node for being released into the network in sequence.

Important features of this embodiment are detection of specific cells (either identification of cells belonging to a virtual connection of interest, or unassigned or idle cells) by the cell filter 68 and control responsive to user instructions of the options of passing the cell through the instrument unaltered, modifying the cell, or dropping the cell and inserting a test cell. These functions are selected responsive to the field modification control signal 118 and VC-detected control signal 100 provided to the multiplexer 128, both responsive to user input.

It will be appreciated that the function of the cell filter 68 in the embodiment shown in Fig. 8 is simply to identify those received cells having VPI and VCI information conforming to stored corresponding data, or similarly to identify unassigned or idle cells. In this circumstance, the exclusive-OR embodiment of the cell filter 68 is adequate. Where, however, a number of virtual connections may require simultaneous monitoring, or where several characteristics of the cells are to be monitored, for example, to measure certain statistics indicative of the overall operation of the methods, the cell filter is preferably implemented by a content-addressable memory (CAM). As is understood by those of skill in the art, a CAM has the capability of simultaneously comparing input data supplied to a comparand register to a number of stored values and outputting correspondence signals and/or data responsive to the comparison. Use of a CAM therefore provides significant additional flexibility to the instrument of the invention and is preferred in numerous embodiments thereof, depending on the exact functions to be performed by the instrument. Figs. 9 and 10, discussed below, illustrate a CAM - containing embodiment of the instrument, as used for monitoring statistics of operation of the network.

### Use in Monitoring Network Performance

As mentioned above, a number of parameters describing network operation are of interest, in particular in monitoring whether the service being provided meets quality of service standards. Parameters of network operation relevant to such determinations include measurement of cell transfer delay, cell delay variation, cell error ratio, cell loss ratio, and cell misinsertion rate, among others.

The rate-matched cell identification, replacement, modification, or insertion process
just discussed is employed in measuring many of these parameters. For example, a particular virtual connection may include a very large number of cells being transmitted between a particular originating source and an ultimate destination. It is not possible to measure the cell transfer delay, for example, without identifying a particular one of the cells and measuring its particular delay. For this reason, the test instrument
is provided with the ability to replace the cells from that virtual connection with test cells including identifiers, time-of-departure time stamps, and sequence numbers. A second test instrument can identify individual test cells, for example, in order to append a time-of-arrival time stamp, and measure the cell transfer delay by computing the difference between the two time stamps. A number of similar tests can be performed with respect to successive cells from a particular virtual connection and the results compared to measure the cell delay variation, a very important parameter in voice and video transmission, as noted.

The test cell is identified at a second node of interest by a second generally similar test instrument similarly monitoring the headers of each cell for detecting cells belonging to the virtual connection and then examining the header, for example, and optionally part of the payload, for identification of a test or OAM cell. For example, a stream of user cells flowing through the test instrument of the invention may be modified, using the cell field modifier circuit, by setting all of the cell loss priority (CLP) bits to 1.

Other modifications are also possible. For example, as noted, individual cell identifiers may be added to the payloads of test cells and detected by a similar instrument, effectively tracking individual cells through the network. In order to avoid the necessity of differentiating such test cells configured as user cells from actual user cells, testing may be performed with respect to particular virtual connections only when they are out of service, i.e., fully configured but not in immediate use for transmission of user cells.

### Overview of OAM Performance Management Processing

As discussed above, certain cells provided in the network are termed OAM (operations, administration, and maintenance) cells. Several types of OAM cells are defined - performance management (PM), fault management (FM), and others. Bits in the PTI field of the header are set to identify the OAM cells for identification by the nodes. These OAM cells accordingly do not contain user data, but include payload information provided for other purposes.

As noted, OAM cell types include performance management (PM), fault management (FM), and other types. The different types of OAM cells are detected and treated differently by the nodes. For example, OAM-FM cells are removed by the nodes from the path traversed by user cells; accordingly, for example, measurements of cell delay determined using test cells configured as OAM-FM cells would not accurately track the cell delays experienced by user cells. OAM-PM cells, by comparison, transit the same path as user cells, and measurement made using test cells configured as OAM-PM cells are representative of transmission of user cells.

OAM-configured test cells may be transmitted, e.g., between intermediate nodes, to measure cell loss ratios at regular intervals between the selected nodes. OAM-PM cells would normally be preferred for this purpose. For example, an instrument according to the embodiment connected to a given node may transmit an OAM cell after every, say, 256 user cells belonging to a specified virtual connection, and a second instrument connected to a receiving node may count the cells received with respect to that virtual connection between detection of OAM cells. If the result is not 256, it is apparent that a cell has been lost or misinserted.

More specifically, user cell counter 111 may be employed to count the user cells received with respect to a particular virtual connection and cause multiplexer 128 to select an OAM-configured test cell for transmission at regular intervals, e.g., every 256 cells, as noted. In many circumstances, the cells immediately following the 256th user cell will also be user cells, and an unassigned or idle cell, as normally preferred for insertion of OAM-configured test cells, will not be available. In order to avoid interference with user traffic, the 256th and all subsequent user cells may be delayed by one cell slot, to permit insertion of the OAM cell. The "lost" cell slot can be recovered upon detection of the next idle cell. However, in busy virtual connections, this may take some time. An alternative is to transmit an OAM cell in place of the next detected idle cell, together with an indication of the actual number of user cells counted by counter 111 in the interval since transmission of the prior OAM-configured test cell. The receiving instrument can then compare the count value provided with its own similar count of the cells received from that virtual connection between successive OAM cells.

### Use in Measuring Round Trip Time

Those of skill in the art will be aware that there are available "virtual source/virtual destination" (VS/VD)-capable nodes, wherein intermediate nodes can be operated in some respects as if they were originating source or ultimate destinations, effectively segmenting the network. The round trip travel time can be measured between such VS/VD-capable nodes, essentially using the process just described. That is, two test instruments
are connected to two VS/VD-capable nodes of interest, and cells including time stamps are originated at a first VS/VD-capable node, looped back at a receiving VS/VD node, and detected at the first to measure the round trip travel time of the message between the two nodes. The capability of identifying specific cells provided according to the present invention is essential to such test capability. Round Trip Time (RTT) can also be measured between an ATM source and a virtual destination, such as a VS/VD-capable node or between an ATM virtual source, again a VS/VD-capable node, and its destination.

### Use of Instrument for Statistics Measurement

### a. Microsequencing Technology

Figs. 9 and 10 provide details of an implementation of the instrument of the invention as employed for measuring certain statistics important in monitoring the overall performance of the ATM network. Fig. 9 shows this test processor, which includes a microsequencer 200.
As shown in Fig. 10, a microsequencer 200 is typically composed of a control memory 202, which stores a microprogram composed of routines, and an address generation circuit 204. Each stored routine is composed of a set of microinstructions dedicated to perform a task. Each microinstruction has two components, a part which executes a micro-operation, and another part fed back to the address generator 204, to select the next microinstruction. The address generation circuit 204 then provides the next address to the control memory 202, which provides the next microinstruction, and so on. The initial "vector" inputs to the address generator 204 come from external circuits, providing a full or a partial starting address to the microsequencer. The feedback signal also affects the choice of the next address. For example, the feedback signal can cause the address generator 204 to increment the prior address to access the next microinstruction, or to branch to a new address in control memory 200.

As employed in a preferred implementation of the present invention, a microsequencer 200 receives vector inputs from a CAM. (See Fig. 9.) The vectors are provided to an address generator 204 responsive to examination of each incoming cell, to select the correct starting address in a control memory 202. Control memory 202 accordingly provides microinstructions controlling incrementing of appropriate memory locations corresponding to the cell types, virtual connection types, and aggregate network cell types corresponding to the cell identification. Table I provides an exemplary list of all types of cells as to which statistics are maintained according to one implementation of the invention.

More specifically, the control memory 202 provides Count Offset, Incrementer Control, and Feedback signals. The Count Offset signal forms the less significant part of the address to a memory device storing running totals of the counts, that is, the Count offset signal specifies the address of the stored count value(s) to be incremented. The Increment Control signal initiates the process of incrementing the count being addressed by the Count Offset signal. The Feedback signal is supplied to address generator 204 to control the addressing of the next microinstruction in control memory 202.

### b. Statistics Processor

Fig. 9 provides a block diagram of the principal components of the test processor 60 as used in an instrument implementing statistics processing functions according to the present invention. An ATM physical layer device 210 is used to extract cells from the physical layer of the network. The physical layer device 210 provides certain indicator control signals to the a controller 212. These signals indicate the occurrence of certain types of error, including cell payload transmission (CRC-10) errors detected using cyclic redundancy check (CRC) bits, correctable or uncorrectable errors in the header, both detected using header error control (HEC) bits (Fig. 4), or loss of cell delineation (i.e., inability to locate the beginning and endings of successive cells). A Loss Of Cell Delineation signal halts all processing of the statistics processor, until cell delineation is reestablished. Uncorrectable and Correctable HEC error indications are passed on to the microsequencer 200 to be counted; uncorrectable HEC error indicators further invalidate the filtering process carried out by the CAM on all cells, such that no other counters are incremented with respect to that particular cell. CRC-10 cell payload errors, that is, signals indicating detection of errors in the cell payload, are also counted by the microsequencer 200, and disable the counts associated with cell payloads, e.g., the counts maintained of various subtypes of OAM cells, RM cells, and AAL3/4 cells, the latter referring to classes of service provided.

Controller 212 can be implemented as a state machine, i.e., a series of logical elements arranged to step along possible predetermined paths and having specified outputs at each step in response to sets of particular input values. The output signals provided by controller 212 may include an Enable Comparison signal controlling comparison of valid received cell data to stored categories of data by the CAM 214, and an Enable operation signal provided to microsequencer 200, as shown. Controller 212 may also pass HEC Error signals, CRC Error signals and the like to microsequencer 200 for counting.

Each received cell is stored in a first in-first out (FIFO) buffer memory 216 in preparation for cell filtering by a content-addressable memory (CAM) 214. The CAM 214 effectively filters the cells in order to identify those of particular interest. As discussed above, cell identification and filtering are performed by supplying a portion of each cell (in a preferred embodiment, including the VPI and VCI, the payload type identifier and cell loss priority bits, and part of the cell payload) to the comparand, i.e., address, register of the CAM 214. Cell identifying information, again at least the VPI and VCI of cells belonging to virtual connections of interest, is stored in CAM 214, typically responsive to user input from user interface 62 (Fig. 6), provided to the CAM via embedded processor controller 224, as indicated at 225.

CAM 214 determines whether the corresponding bits of each received cell match any of the information stored in the CAM. If a match is detected, indicating, for example, detection of an OAM cell received from a particular virtual connection of interest, a VC Region Index signal and a Counts Vector signal are provided by CAM 214, that is, those signals form the associated data field of the matched entry. The Counts Vector signal is stored by a rate-decoupling FIFO 218, and becomes an input signal to an address generator 204 comprised by microsequencer 200 (see Fig. 10); that is, the Counts Vector signal becomes a Vector input signal selecting a microsequencer subroutine needed to increment the appropriate counter values. The VC Region Index signal is effectively a compressed version of the VCI/VPI address, and is used to select a memory region in a dual port random access memory (DPRAM)220. DPRAM 220 contains the count values used to record network operational statistics; those associated with a particular virtual connection are all accessed by the VC Region signal, with individual counts selected by the Count Offset signal. Stated differently, the VC Region index signal is used to select the region in memory 220 maintaining counters for the aggregate network traffic. It will be appreciated that the number of virtual connections which can be supported is limited by the size of the VC Region Index, e.g. an 8-bit VC Region Index signal supports simultaneous maintenance of count values with respect to each of up to 256 virtual connections.

Microsequencer 200 operates to maintain various statistics stored by the dual-port random access memory (DPRAM) 220 by generating the appropriate count offset addresses corresponding to the statistical counts to be incremented, causing the previously stored count values to be read from the addressed memory locations in DPRAM 220, and supplied via a 16-bit data bus 221 to an incrementer 222 for incrementing. The incremented values are then stored back in their original locations in DPRAM 220.

An embedded processor controller 224 extracts the stored results from DPRAM 220 periodically, responsive to a toggling signal provided by a results update interval timer 226. For example, in monitoring a 155.52 Mbps network, the results update interval (i.e., the interval at which the stored values are read and reset to zero) must be at least equal to 8 cycles per second, to assure that none of the 16-bit counter values stored by DPRAM 220 will overflow. Adjustments to counter value sizes in DPRAM 220 and results update intervals are required to support lower or higher speed networks.

As indicated, the DPRAM 220 is bank-switched, that is, two copies of all of the counted values are maintained by the DPRAM corresponding to the virtual connections being monitored. Each copy occupies a different bank. This allows microsequencer 100 to continue to increment counter values in one bank while embedded processor controller 224 extracts the results from the other bank. As noted, a clock signal from results update interval timer 226 causes the banks to toggle.

The monitored counts, that is, the statistics that are maintained, are typically used to track network utilization, such as the number of high priority cells received with respect to each virtual connection being monitored. Table I following identifies one set of statistics that may be maintained, for monitoring operation of the network according to the invention.

As indicated by the three columns of Table I, cell type statistics are maintained for each virtual connection (VC) (column 1) for reserved VCs, for monitoring use of reserved VCs (e.g., for call set-up messages, OAM cells, and the like (column 2), and in the aggregate (column 3). The individual cell types listed and selected by the counter offset address in each row of the table are identified by the ATM publications mentioned above and will be familiar to those of skill in the art.

The counts contained in Table I are accumulated in the test processor 60 of Fig. 5 and passed as test results to the host processor 64 at regular time intervals. The host processor 64 will add test results from the latest time interval to previously accumulated results. In addition, the host processor 64 performs various arithmetic operations such as adding, subtracting, multiplying, or dividing categories of results, in order to derive other result categories. The host processor 64 then filters and formats the test results and passes test and measurement information to the user interface 62.

The following is an example of the results processing which may be provided by the test instrument of the invention. As shown in the first two rows of Table I, corresponding to counter offset addresses 0 and 1, CLP=0 and CLP=1 counts (that is, counts of cells having their CLP bit set to 0 or 1 respectively) are accumulated with respect to a particular VC in column 1; this category is therefore called Cell Type Counter Maintained for each VC Region Address. The information is stored in DPRAM 220 of Fig. 9 during the time interval controlled by the results update interval timer 226. At the end of the results update interval as controlled by timer 226, the CLP=0 and CLP=1 counts (and others) are read by embedded processor controller 224 and added to the corresponding previous CLP=0 and CLP=1 counts. The new CLP=0 and CLP=1 counts are added together to derive a total VC cell count. The CLP=0 count is divided by the total VC cell count and multiplied by 200 to derive the percentage of cells having high priority. The percentage of high priority cells is presented to the user interface for display.

**TABLE I**

| | **1** | **2** | **3** |
|---|---|---|---|
| **Counter Offset Address** | **Cell Type Counters Maintained For Each VC Region Address** | **Reserved Virtual Connection Cell Type Counters** | **Aggregate Network Cell Type Counters** |
| 0 | CLP=0 | CLP=0 | CLP=0 |
| 1 | CLP=1 | CLP=1 | CLP=1 |
| 2 | Uncongested | Uncongested | Uncongested |
| 3 | Congested | Congested | Congested |
| 4 | AAL5 EOM | AAL5 EOM | AAL5 EOM |
| 5 | OAM F5 Segment | OAM F5 Segment | OAM F5 Segment |
| 6 | OAM F5 End-to-End | OAM F5 End-to-End | OAM F5 End-to-End |
| 7 | In-Band RM | In-Band RM | In-Band RM |
| 8 | Out-of-Band RM | Out-of-Band RM | Out-of-Band RM |
| 9 | Reserved | Reserved | Reserved |
| 10 | OAM PM | OAM PM | OAM PM |
| 11 | OAM FM | OAM FM | OAM FM |
| 12 | OAM A/D | OAM A/D | OAM A/D |
| 13 | OAM SM (Sys Mgmnt) | OAM SM (Sys Mgmnt) | OAM SM (Sys Mgmnt) |
| 14 | AAL3/4 BOM | AAL3/4 BOM | Unused |
| 15 | AAL3/4 COM | AAL3/4 COM | Unused |
| 16 | AAL3/4 SSM | AAL3/4 SSM | Unused |
| 17 | AAL3/4 EOM | AAL3/4 EOM | Unused |
| 18 | Congested RM | Congested RM | Congested RM |
| 19 | No Increase RM | No Increase RM | No Increase RM |
| 20 | ACR Increase RM | ACR Increase RM | ACR Increase RM |
| 21 | Forward RM | Forward RM | Forward RM |
| 22 | Backward RM | Backward RM | Backward RM |
| 23 | Unused | Unused | Unused |
| 24 | Unused | Unused | Unused |
| 25 | Unused | Unused | Invalid Cell (different types) |
| 26 | Unused | Unused | GFC /= 0 |
| 27 | RM CRC-10 Error | RM CRC-10 Error | RM CRC-10 Error |
| 28 | OAM CRC-10 Error | OAM CRC-10 Error | OAM CRC-10 Error |
| 29 | AAL3/4 CRC-10 Error | AAL3/4 CRC-10 Error | Unused |
| 30 | AAL3/4 Length Error | AAL3/4 Length Error | Uncorrectable HEC |
| 31 | Correctable HEC | Correctable HEC | Correctable HEC |

It will thus be appreciated that statistics are maintained according to the invention using a CAM 214 to identify cells by comparing at least part of the header (and in some cases part of the payload) of each received cell to stored information identifying, for example, particular virtual connections and cell characteristics of interest. When a match is detected by CAM 214, a Counts Vector signal provides an address to a microprogram stored by microsequencer 200. The microsequencer 200 reads each Counts Vector from the FIFO 218 in order to select and activate a corresponding microprogram. Each microprogram in turn provides a list of addresses of the appropriate counts in DPRAM 220 to be incremented. Thus the counts stored by the DPRAM 220 corresponding to the cells of interest are incremented by the microsequencer 200. The current value for each count to be incremented is retrieved from DPRAM 220, incremented by an incrementer 222, and written back to its assigned location in DPRAM 220. Stated more generally, the CAM 214 examines the pertinent fields of each incoming cell and provides the microsequencer 210 with information identifying the counts to be incremented. The microsequencer then causes the correct counts located in DPRAM 220 to be read therefrom, incremented, and stored back into DPRAM 220.

At intervals controlled by timer 226, the values for each count are read and cleared from DPRAM 220 by controller 224. In the preferred embodiment, DPRAM 220 is implemented as a dual-port random access memory, divided into two banks which are organized identically; the most significant address line is used to toggle access between the banks. Toggling is initiated by a Toggle Banks signal provided by the results update interval timer, implementing a "bank switching" function. The bank switching function allows one bank of the memory to be read by the embedded processor controller while the microsequencer is simultaneously incrementing counts stored in the other bank. The toggling interval, as controlled by the results update interval timer, must occur frequently enough to prevent the counters contained inside the DPRAM from overflowing, resulting in a loss of data, e.g., due to a continuous stream of cells of a single type. The embedded processor controller 224 may be used to generate additional "derived statistics" by mathematically combining the results read from the dual port memory.

Finally, it should be understood that the basic architecture of the statistics processor shown in Fig. 9 is also useful in monitoring statistics of non-ATM communications networks which also operate at high speeds. For example, statistics may be maintained with respect to low-speed frame relay networks using conventional microprocessor technology to recognize the individual packets by examination of their Data Link Connection Identification (DLCI) bits, that is, by examination of header information, analogous to the VPI and VCI information of ATM cells, comprised by each frame relay packet. However, microprocessor speeds are inadequate to monitor statistics in high-speed "DS3" frame relay networks, employing data rates of 45 mbits/sec. With appropriate modifications which will be apparent to those of skill in the art, the statistics processor architecture of Fig. 2, employing a CAM to examine header information at high rates, a microsequencer to increment counts corresponding to data of interest, and a dual port RAM to store the counts while permitting data to be read out, is capable of successfully monitoring statistics concerning operation of high-speed frame relay communications links.

### Conclusion

It will thus be appreciated that the instrument of the invention, having the capability of identifying individual cells in a stream of ATM cells by examining the cell header information of each, is therefore enabled to perform operations not possible in the prior art. More specifically, the ability to identify cells from a particular virtual connection and modify, replace, or augment them with test or OAM cells recognizable elsewhere in the network by a second test instrument, or looped-back by an OAM-capable node, allows the transmission of individual cells to be monitored. This ability in turn allows direct measurement of cell transfer delay and other important parameters, even though a particular virtual connection may include thousands of cells, none of which indicate under normal circumstances their position in the sequence of cells transmitted over the virtual connection. In absence of the capability of the instrument of the invention to add individual identifiers to the cells of particular virtual connections, it would not be possible to measure actual transmission parameters with respect to individual ATM cells. By comparison, in STM, where cells from a particular connection are constrained to occupy specific time slots in an overall sequence, there is no need to identify cells belonging to an individual connection by examining each cell passing through a node.

While a preferred embodiment of the invention has been described in detail, and numerous examples of its operation have been given, it will be appreciated by those of skill in the art that these are merely exemplary and that other implementations of these and various further aspects are also within its scope as defined by the following claims.

## Claims

1. An instrument for measuring statistical characteristics of traffic in an asynchronous transfer mode (ATM) communication network comprising a number of traffic sources and destinations connected by switched nodes, such that messages to be transmitted are divided at their source into one or more cells each comprising a header of predetermined format and a payload of predetermined length, said header including message type, message priority, and routing information, said instrument comprising:
means (52) for connecting said instrument in order to monitor the stream of traffic passing through one of said nodes, such that said instrument is capable of detecting at least specified information with respect to the header of each cell traversing said node;
means (214) for examining said header information of each cell, to determine the message type or the message priority information contained therein, with at most a minimal fixed delay in passage of said traffic through said node; and
means (214) for classifying each cell into one of a plurality of classes responsive to the message type or the message priority information comprised in the header thereof;
**characterized by**:
said means (214) for examining said header information comprising content-addressable memory means (214), wherein at least a portion of said header information of each cell traversing said node is provided to a comparand register of said content-addressable memory (214); and
means (200), responsive to said means for classifying, for counting cells of predetermined classes in a stream of cells.

2. The instrument of claim I, wherein said content-addressable memory means (214) further comprises said means for classifying each cell (214), wherein in response to provision of at least a portion of said header information of each cell traversing said node to a comparand register of said content-addressable memory (214), said content-addressable memory (214) provides an indication of the classification of each cell as output to said means for counting cells (200) or predetermined classes responsive to said header information.

3. The instrument of claim 2, wherein said means (200) for counting cells of predetermined classes responsive to said header information comprises microsequencer means (200) for controlling storage of counts of cells of predetermined classes, and for incrementing said stored counts of cells responsive to said indication of the classification of each cell received from said content-addressable memory (214).

4. The instrument of claim 2, wherein said content-addressable memory (214) further examines the routing information of each cell to permit monitoring of the frequency of transmission of cells to various destinations.

5. A method for obtaining statistical information describing a stream of cells in an asynchronous transfer mode (ATM) communication network, wherein messages to be transmitted are divided at their source into one or more cells each comprising a header of predetermined format and a payload of predetermined length, said header including message type, message priority, and routing information, each cell of a given message being transmitted over a single virtual connection between its source and destination, comprising the steps of:
connecting a test instrument (54) capable of examining the headers of cells in real time, such that traffic flow is not substantially impeded, to a test port defined by a node in said network;
**characterized by** the further steps of:
employing a content-addressable memory (214) comprised by said test instrument to examine at least the headers of each cell, and to classify each cell into one of a plurality of classes as to its message type or message priority; and
counting the types of cells of predetermined classes passing through the node in a given period of time.

6. The method of claim 5, wherein said steps of examining and classifying are performed by providing at least said header information of each cell to a comparand register of content-addressable memory means (214) comprised by said test instrument (54), said content-addressable memory means (214) providing an indication of the classification of each cell to means for counting cells of predetermined classes.

7. A statistics processor for employment in a test instrument (54) for monitoring operation of a communication network, wherein messages are transmitted as a series of cells each comprising a header of fixed format and a payload of defined length, said header including message type, message priority, and routing information, comprising:
a cell filter (68, 214) for comparing at least a predetermined portion of each cell in a stream of cells to stored information identifying one or more classes of cells of interest by specifying message type or message priority information, and for providing a cell identification signal responsive to said comparison;
a microsequencer (200) for responding to said cell identification signal from said cell filter (68, 214) by providing a count offset signal to a random-access memory (220) storing counts of cells of various classes being monitored, and an increment control signal to an incrementer (222),
the random-access memory (220) responsive to said count offset signal by retrieving the stored count corresponding to the cell identification signal and providing said retrieved stored count to said incrementer (222), and
said incrementer (222) incrementing the retrieved stored count by one responsive to said increment control signal.

8. The statistics processor of claim 7, wherein said cell filter (68, 214) is a content-addressable memory (214) capable of storing a plurality of sets of message type or message priority information corresponding to a plurality of cell types to be monitored, for simultaneously comparing said stored plurality of sets of message type or message priority information to the corresponding portions of each incoming cell, and for providing said cell identification signals responsive thereto.

## Patentansprüche

1. Vorrichtung bzw. Instrument zum Messen statistischer Eigenschaften von Traffic bzw. Verkehr in einem Kommunikationsnetzwerk mit asynchronem Übertragungsmodus (ATM), umfassend eine Vielzahl von Verkehrsquellen und Zielorten, verbunden durch Schaltknoten, sodass zu übertragende Mitteilungen bzw. Messages bei ihrer Quelle aufgeteilt werden in eine oder mehrere Zellen, jeweils umfassend einen Header bzw. Kopf mit vorbestimmtem Format und einen Payload von vorbestimmter Länge, wobei der Header Messagetyp-, Messageprioritäts- und Routinginformationen einschließt, wobei die Vorrichtung umfasst:
Mittel (52) zum Verbinden der Vorrichtung, um den Verkehrsstrom, der über einen der Knoten führt, so zu verfolgen, dass die Vorrichtung zumindest spezifizierte Informationen hinsichtlich des Headers von jeder Zelle, die den Knoten durchquert, nachweisen kann;
Mittel (214) zum Prüfen der Headerinformationen jeder Zelle, um die Messagetyp- oder die Messageprioritätsinformationen, die darin enthalten sind, mit höchstens einer minimalen festgelegten Verzögerung beim Durchleiten des Verkehrs über den Knoten zu ermitteln; und
Mittel (214) zum Einordnen bzw. Klassifizieren jeder Zelle in eine von einer Vielzahl von Klassen, rea-gierend auf die Messagetyp- oder die Messageprioritätsinformationen, die in dem Header davon enthalten sind; **gekennzeichnet durch**:
das Mittel (214) zum Prüfen der Headerinformationen, umfassend ein Inhaltsadressierbares Speichermittel (214), wobei zumindest ein Bereich der Headerinformationen von jeder Zelle, die den Knoten durchquert, für ein Comparandregister von dem Inhalts-adressierbaren Speicher (214) bereitgestellt wird; und
Mittel (200), reagierend auf das Mittel zum Einordnen, zum Zählen von Zellen von vorbestimmten Klassen in einem Strom von Zellen.

2. Vorrichtung nach Anspruch 1, wobei das Inhalts-adressierbare Speichermittel (214) weiterhin das Mittel zum Einordnen jeder Zelle (214) umfasst, wobei in Antwort auf eine Bereitstellung von zumindest einem Bereich der Headerinformationen von jeder Zelle, die den Knoten durchquert, für ein Comparandregister von dem Inhalts-adressierbaren Speicher (214), der Inhalts-adressierbare Speicher (214) eine Anzeige der Einordnung von jeder Zelle als Ausgang für das Mittel zum Zählen von Zellen (200) von vorbestimmten Klassen, reagierend auf die Headerinformationen, bereitstellt.

3. Vorrichtung nach Anspruch 2, wobei das Mittel (200) zum Zählen von Zellen von vorbestimmten Klassen, reagierend auf die Headerinformationen, ein Mikrosequenzermittel (200) zum Steuern einer Speicherung von Zählungen von Zellen von vorbestimmten Klassen, und zum Inkrementieren der gespeicherten Zählungen von Zellen, reagierend auf die Anzeige der Einordnung von jeder Zelle, empfangen aus dem Inhalts-adressierbaren Speicher (214), umfasst.

4. Vorrichtung nach Anspruch 2, wobei der Inhalts-adressierbare Speicher (214) weiterhin die Routinginformationen von jeder Zelle zum Erlauben einer Verfolgung der Übertragungshäufigkeit von Zellen zu verschiedenen Zielorten prüft.

5. Verfahren zum Gewinnen statistischer Informationen, die einen Strom von Zellen in einem Kommunikationsnetzwerk mit asynchronem Übertragungsmodus (ATM) beschreiben, wobei zu übertragende Messages bzw. Mitteilungen bei ihrer Quelle in eine oder mehrere Zellen aufgeteilt werden, jeweils umfassend einen Header bzw. Kopf von vorbestimmtem Format und einen Payload von vorbestimmter Länge, wobei der Header Messagetyp-, Messageprioritäts- und Routinginformationen einschließt, wobei jede Zelle von einer gegebenen Message über eine einzige virtuelle Verbindung zwischen ihrer Quelle und einem Ziel übertragen wird, umfassend die Schritte von:
Anschließen bzw. Verbinden einer Testvorrichtung (54), die die Header von Zellen in Echtzeit prüfen kann, sodass der Verkehrsstrom im Wesentlichen nicht beeinträchtigt wird, an einen Testport, definiert durch einen Knoten in dem Netzwerk;
**gekennzeichnet durch** die weiteren Schritte von:
Anwenden eines Inhalts-adressierbaren Speichers (214), umfassend die Testvorrichtung zum Prüfen zumindest der Header von jeder Zelle, und zum Einordnen bzw. Klassifizieren jeder Zelle in eine von einer Vielzahl von Klassen, hinsichtlich ihres Messagetyps oder Messagepriorität; und
Zählen der Arten bzw. Typen von Zellen von vorbestimmten Klassen, die über den Knoten in einem gegebenen Zeitraum geleitet werden.

6. Verfahren nach Anspruch 5, wobei die Schritte von Prüfen und Einordnen ausgeführt werden durch Bereitstellen zumindest der Headerinformationen von jeder Zelle für ein Comparandregister von Inhalts-adressierbarem Speichermittel (214), enthalten in der Testvorrichtung (54), wobei die Inhalts-adressierbare Speichervorrichtung (214) eine Anzeige der Einordnung von jeder Zelle zu Mitteln zum Zählen von Zellen von vorbestimmten Klassen bereitstellt.

7. Statistikprozessor zur Anwendung in einer Testvorrichtung (54) zum Verfolgen des Betriebs von einem Kommunikationsnetzwerk, wobei Messages als eine Reihe von Zellen, jeweils umfassend einen Header von festgelegtem Format und einen Payload von definierter Länge, übertragen werden, wobei der Header Messagetyp-, Messagepriorität- und Routinginformationen einschließt, umfassend:
einen Zellfilter (68, 214) zum Vergleichen zumindest eines vorbestimmten Bereichs von jeder Zelle in einem Strom von Zellen zu gespeicherten Informationen, die eine oder mehrere Klassen von infrage kommenden Zellen identifizieren, durch Spezifizieren von Messagetyp- oder Messageprioritätsinformationen, und zum Bereitstellen eines Zellidentifizierungssignals, reagierend auf den Vergleich;
einen Mikrosequenzer (200) zum Reagieren auf das Zellidentifizierungssignal aus dem Zellfilter (68, 214), durch Bereitstellen eines Zählungsoffsetsignals für einen Random-Access-Speicher (220), der Zählungen von Zellen von verschiedenen Klassen, die verfolgt werden, speichert, und eines Inkrementsteuerungssignals für einen Vorwärtszähler (222) bzw. Inkrementor;
den Random-Access-Speicher (220), reagierend auf das Zählungsoffsetsignal, durch Abfragen der gespeicherten Zählung, entsprechend dem Zellidentifizierungssignal, und Bereitstellen der abgefragten, gespeicherten Zählung für den Vorwärtszähler (222), und
wobei der Vorwärtszähler (222) die abgefragte, gespeicherte Zählung um eine, reagierend auf das Inkrementsteuerungssignal, inkrementiert bzw. erhöht.

8. Statistikprozessor nach Anspruch 7, wobei der Zellfilter (68, 214) ein Inhaltsadressierbarer Speicher (214) ist, der zum Speichern einer Vielzahl von Sätzen von Messagetyp- oder Messageprioritätsinformationen, entsprechend einer Vielzahl von zu verfolgenden Zelltypen, in der Lage ist, zum gleichzeitigen Vergleichen der gespeicherten Vielzahl von Sätzen von Messagetyp- oder Messageprioritätsinformationen, für die entsprechenden Bereiche bzw. mit den entsprechenden Bereichen von jeder hereinkommenden Zelle, und zum Bereitstellen der Zellidentifizierungssignale, die darauf reagieren.

## Revendications

1. Instrument servant à mesurer des caractéristiques statistiques d'un trafic dans un réseau de communication en mode de transfert asynchrone (ATM), comprenant plusieurs sources et destinations de trafic connectées par des noeuds commutés, de façon que des messages à transmettre sont divisés au niveau de leur source en une ou plusieurs cellules comprenant chacune un en-tête de format prédéterminé et une charge utile de longueur prédéterminée, ledit en-tête comprenant le type du message, la priorité du message, et des informations de routage, ledit instrument comprenant :
des moyens (52) destinés à connecter ledit instrument afin de surveiller le flot de trafic passant par l'un desdits noeuds, de façon que ledit instrument soit capable de détecter au moins des informations spécifiées par rapport à l'en-tête de chaque cellule traversant ledit noeud ;
des moyens (214) destinés à examiner lesdites informations d'en-tête de chaque cellule, afin de déterminer les informations de type du message et de priorité du message qui y sont contenues, avec au plus un retard fixe minimal lors du passage dudit trafic à travers ledit noeud ; et
des moyens (214) destinés à classifier chaque cellule dans l'une des classes en fonction des informations de type du message ou de priorité du message contenues dans son en-tête ;
**caractérisé en ce que** :
lesdits moyens (214) destinés à examiner lesdites informations d'en-tête comprennent des moyens formant mémoire adressable par le contenu (214), dans lesquels au moins une partie desdites informations d'en-tête de chaque cellule traversant ledit noeud est envoyée à un registre de comparaison de ladite mémoire adressable par le contenu (214) ; et par
des moyens (200), répondant auxdits moyens de classification, destinés à compter des cellules de classes prédéterminées dans un flot de cellules.

2. Instrument selon la revendication 1, dans lequel lesdits moyens formant mémoire adressable par le contenu (214) comprennent, en outre, lesdits moyens (214) destinés à classifier chaque cellule, où, en réponse à l'envoi d'au moins une partie desdites informations d'en-tête de chaque cellule traversant ledit noeud à un registre de comparaison de ladite mémoire adressable par le contenu (214), ladite mémoire adressable par le contenu (214) envoie une indication de la classification de chaque cellule en tant que signal de sortie aux moyens (200) destinés à compter les cellules de classes prédéterminées en fonction desdites informations d'en-tête.

3. Instrument selon la revendication 2, dans lequel lesdits moyens (200) destinés à compter les cellules de classes prédéterminées en fonction desdites informations d'en-tête comprennent des moyens formant microséquenceur (200) destinés à commander le stockage de comptes de cellules de classes prédéterminées, et à incrémenter lesdits comptes de cellules stockés en réponse à ladite indication de la classification de chaque cellule reçue en provenance de ladite mémoire adressable par le contenu (214).

4. Instrument selon la revendication 2, dans lequel ladite mémoire adressable par le contenu (214) examine, en outre, les informations de routage de chaque cellule pour permettre la surveillance de la fréquence de transmission de cellules vers différentes destinations.

5. Procédé pour obtenir des informations statistiques décrivant un flot de cellules dans un réseau de communication en mode de transfert asynchrone (ATM), dans lequel des messages à transmettre sont divisés au niveau de leur source en une ou plusieurs cellules comprenant chacune un en-tête de format prédéterminé et une charge utile de longueur prédéterminée, ledit en-tête comprenant le type du message, la priorité du message, et des informations de routage, chaque cellule d'un message donné étant transmise sur une seule connexion virtuelle entre sa source et sa destination, le procédé comprenant les étapes qui consistent à :
connecter à un port de test défini par un noeud dudit réseau un instrument de test (54) capable d'examiner les en-têtes des cellules en temps réel, de façon que l'écoulement du trafic ne soit pratiquement pas entravé ;
**caractérisé par** les étapes supplémentaires consistant à :
utiliser une mémoire adressable par le contenu (214) incluse dans l'instrument de test pour examiner au moins les en-têtes de chaque cellule et pour classifier chaque cellule dans l'une des classes en fonction de son type de message ou de sa priorité de message ; et
compter les types de cellules de classes prédéterminées passant par le noeud, dans un laps de temps donné.

6. Procédé selon la revendication 5, dans lequel lesdites étapes d'examen et de classification sont exécutées par l'opération consistant à envoyer au moins lesdites informations d'en-tête de chaque cellule à un registre de comparaison des moyens formant mémoire adressable par le contenu (214) inclus dans ledit instrument de test (54), lesdits moyens formant mémoire adressable par le contenu (214) envoyant une indication de la classification de chaque cellule aux moyens destinés à compter les cellules de classes prédéterminées.

7. Unité de traitement de statistiques à utiliser dans un instrument de test (54) pour surveiller le fonctionnement d'un réseau de communication, dans lequel des messages sont transmis sous la forme d'une série de cellules comprenant chacune un en-tête de format fixe et une charge utile de longueur définie, ledit en-tête comprenant le type du message, la priorité du message, et des informations de routage, l'unité de traitement de statistiques comprenant :
un filtre de cellules (68, 214) destiné à comparer au moins une partie prédéterminée de chaque cellule d'un flot de cellules, afin de stocker des informations identifiant une ou plusieurs classes de cellules d'intérêt en spécifiant des informations de type de message et de priorité de message, et à produire un signal d'identification de cellule en fonction de ladite comparaison ;
un microséquenceur (200) destiné à répondre au signal d'identification de cellule émis par ledit filtre de cellules (68, 214) en envoyant un signal de décalage de compte à une mémoire à accès aléatoire (220) stockant des comptes de cellules de différentes classes surveillées, et un signal de commande d'incrémentation à un module d'incrémentation (222) ;
la mémoire à accès aléatoire (220) répondant audit signal de décalage de compte en récupérant le compte stocké correspondant au signal d'identification de cellule et en envoyant ledit compte stocké récupéré audit module d'incrémentation (222) ; et
ledit module d'incrémentation (222) incrémentant le compte stocké récupéré de un, en réponse audit signal de commande d'incrémentation.

8. Unité de traitement de statistiques selon la revendication 7, dans lequel ledit filtre de cellules (68, 214) est une mémoire adressable par le contenu (214) capable de stocker une pluralité d'ensembles d'informations de type de message et de priorité de message correspondant à une pluralité de types de cellules à surveiller, afin de comparer simultanément ladite pluralité d'ensembles d'informations de type de message et de priorité de message stockée aux parties correspondantes de chaque cellule entrante, et à émettre lesdits signaux d'identification de cellules en fonction de ces comparaisons.
